# EUROPÄISCHE PATENTSCHRIFT

(11) **EP 1 697 652 B1**
(45) Veröffentlichungstag und Bekanntmachung des Hinweises auf die Patenterteilung: **28.02.2007**
(21) Anmeldenummer: 04803679.2
(22) Anmeldetag: 09.12.2004
(51) Int. Cl.: F16D 33/06

(54) **HYDRODYNAMISCHE KUPPLUNG**
HYDRODYNAMIC CLUTCH
EMBRAYAGE HYDRODYNAMIQUE

(30) Priorität: 22.12.2003 DE 10360055
(43) Veröffentlichungstag der Anmeldung: 06.09.2006
(73) Patentinhaber: Voith Turbo GmbH & Co. KG, 89522 Heidenheim (DE)
(72) Erfinder: KLEY, Markus, 73479 Ellwangen (DE)
(74) Vertreter: Dr. Weitzel & Partner
(86) Internationale Anmeldenummer: PCT/EP2004/014022
(87) Internationale Veröffentlichungsnummer: WO 2005/064184

(56) Entgegenhaltungen:
- GB-A- 194 739
- GB-A- 892 314
- GB-A- 1 424 704
- US-A- 4 773 513
- US-A- 5 138 840

## Beschreibung

Die Erfindung betrifft eine hydrodynamische Kupplung und insbesondere die Leitungsführung für Arbeitsmedium innerhalb der hydrodynamischen Kupplung.

Hydrodynamische Kupplungen sind bekannt. Ein besonderer Einsatzbereich liegt auf dem Gebiet der Turbocompoundsysteme, bei welchen in einem Antriebsstrang eine Abgasnutzturbine im Abgasstrom eines Verbrennungsmotors angeordnet ist und in einer Triebverbindung mit der Kurbelwelle steht. In die Triebverbindung zwischen der Abgasnutzturbine und der Kurbelwelle ist in solchen Systemen vorteilhaft eine hydrodynamische Kupplung zur Leistungs- beziehungsweise Drehmomentübertragung geschaltet. Wenn das Primärrad einer solchen hydrodynamischen Kupplung von der Abgasnutzturbine angetrieben wird, treibt dieses über den Arbeitsmediumströmungskreislauf im Arbeitsraum der hydrodynamischen Kupplung das Sekundärrad der hydrodynamischen Kupplung an, welches in der Regel über ein geeignetes Getriebe mit der Kurbelwelle verbunden ist. Dieser erste Antriebsmodus wird auch als Turbokupplungsmodus bezeichnet.

Sofern die hydrodynamische Kupplung mit einem Mittel zum drehfesten Verriegeln des Primärrades ausgestattet ist, kann die hydrodynamische Kupplung in einem zweiten Modus - Retardermodus - zum Abbremsen der Kurbelwelle verwendet werden. In diesem Modus wird das Sekundärrad von der Kurbelwelle angetrieben, das Primärrad drehfest verriegelt, beispielsweise mittels einer Lamellenkupplung, und durch Drehmomentübertragung von dem Sekundärrad auf das Primärrad die Kurbelwelle abgebremst. Aufgrund dessen, dass in einem Fall (Turbokupplungsmodus) das Primärrad und im anderen Fall (Retardermodus) das Sekundärrad angetrieben wird, ist die Strömungsrichtung des Arbeitsmediumkreislaufes in den beiden Fällen entgegengesetzt. Dadurch variiert die Richtung des Axialschubs, was bei der Auslegung der Lager und der Wellendichtungen berücksichtigt werden muss.

Ferner sind die Drehzahlbereiche im Turbokupplungsmodus und im Retardermodus unterschiedlich. Insgesamt ergibt sich üblicherweise ein Drehzahlbereich zwischen 4000 Umdrehungen pro Minute und 12000 Umdrehungen pro Minute. Die Zulauf- und Ablaufdichtungen, das heißt die Dichtungen, mit welchen die arbeitsmediumzuführenden Kanäle und die arbeitsmediumabführenden Kanäle abgedichtet sind, werden in diesem Drehzahlbereich betrieben. Bei allen Relativabdichtungen, das heißt bei Abdichtungen zwischen Bauteilen, von denen sich das eine mit einer anderen Drehzahl dreht als das andere und von denen sich das eine dreht und das andere nicht dreht, besteht insbesondere das Problem, dass zwei ausgeprägte Betriebsbereiche vorliegen. Daher werden die Relativabdichtungen herkömmlich in Form einer aufwendigen Gleitringdichtung ausgeführt. Eine solche Gleitringdichtung ist vergleichsweise teuer und störungsanfällig.

GB-A-1 424 704 offenbart eine hydrodynamische Kupplung mit einer feststehenden Nabe, welche vom Pumpenrad umschlossen wird. In der feststehenden Nabe sind Axialkanäle vorgesehen, durch welche das Arbeitsmedium zu- und abgeführt wird.

GB-A-1 194 739 offenbart eine Lokomotive mit einem Flüssigkeitsgetriebe. In der Abtriebswelle des Flüssigkeitsgetriebes, welche die Räder trägt, sind ein Zufuhrkanal für Flüssigkeit und ein Abfuhrkanal für Flüssigkeit vorgesehen.

Im Hinblick auf hydrodynamische Kupplungen wird ferner auf die folgenden Dokumente verwiesen:
GB-A-892 314
US-A-4 773 513
US-A-5 138 840

Der Erfindung liegt die Aufgabe zugrunde, eine hydrodynamische Kupplung, insbesondere für einen Einsatz in einem Turbocompoundsystem, anzugeben, welche gegenüber dem Stand der Technik verbessert ist. Insbesondere soll die erfindungsgemäße hydrodynamische Kupplung mit weniger Gleitringdichtungen auskommen.

Die erfindungsgemäße Aufgabe wird durch eine hydrodynamische Kupplung mit den Merkmalen des Anspruchs 1 gelöst. Anspruch 7 beschreibt einen entsprechenden erfindungsgemäßen Antriebsstrang. Die Unteransprüche beschreiben besonders vorteilhafte Weiterbildungen der Erfindung.

Die erfindungsgemäße hydrodynamische Kupplung zeichnet sich dadurch aus, dass in einer Antriebswelle, welche das Primärrad antreibt, ein Zufuhrkanal zum Zuführen von Arbeitsmedium in den Arbeitsraum und ein Abfuhrkanal zum gleichzeitigen Abführen von Arbeitsmedium aus dem Arbeitsraum ausgebildet ist. Selbstverständlich können auch mehrere Zuführkanäle und mehrere Abführkanäle vorgesehen sein. Insbesondere kommt ein zentraler Zufuhrkanal und mehrere diesen zentralen Zufuhrkanal umschließende Abfuhrkanäle in Betracht.

Durch das Vorsehen von Zufuhrkanälen bzw. Abfuhrkanälen innerhalb der Antriebswelle laufen alle Kanäle mit der gleichen Drehzahl um, so dass gegenüber herkömmlichen Ausführungen, bei welchen die zuführenden Kanäle in einem Bauteil mit einer ersten Drehzahl und die abführenden Kanäle in einem Bauteil mit einer zweiten Drehzahl ausgebildet waren und entsprechend einzeln gegenüber stationären Bauteilen abgedichtet werden mussten, wenigstens eine aufwendige Gleitringdichtung wegfallen kann. Stattdessen kann eine einfachere Spaltdichtung zwischen dem Zu- und Ablauf ermöglicht werden.

Der oder die Zufuhrkanäle und der oder die Abfuhrkanäle verlaufen vorteilhaft zumindest über einen vorgegebenen Abschnitt in axialer Richtung in der Antriebswelle. Der oder die Abfuhrkanäle sind vorteilhaft radial außerhalb des oder der Zufuhrkanäle angeordnet. Zum einen kann dadurch die Abdichtung zwischen den Kanälen besonders einfach ausgeführt werden, zum anderen können die radial außen angeordneten Abfuhrkanäle in einem Bereich des größeren Umfangs des Arbeitsraums der hydrodynamischen Kupplung münden und die radial inneren Zufuhrkanäle in einem Bereich des Arbeitsraum, welcher auf einem radial weiter innen liegenden gelegen ist. Insbesondere kommt für diese radial inneren Mündungen ein Bereich zwischen dem radial inneren Umfang und dem Umfang der mittleren Höhe des Arbeitsraums in Betracht. Insbesondere wird das Arbeitsmedium direkt in das Zentrum, d. h. dem Bereich des Mittelpunkts der Kreislaufströmung, in das sogenannte Retarderauge geleitet.

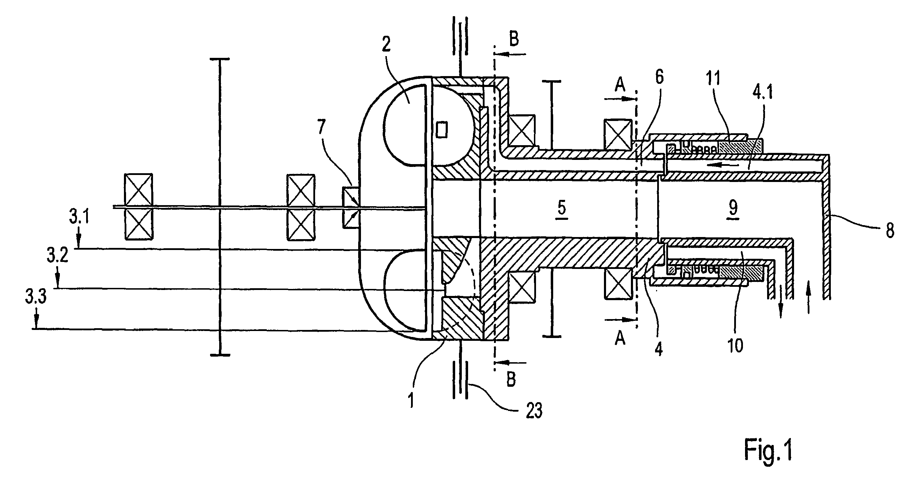

Diese Positionierung der Mündungen auf vorgegebenen Höhen des Arbeitsraumes ist insbesondere dann günstig, wenn die hydrodynamische Kupplung sowohl im Turbokupplungsmodus als auch im Retardermodus betrieben wird. Im Retarderbetrieb ist nämlich infolge der hohen Wärmeentwicklung im Arbeitsraum ein großer Durchsatz von Arbeitsmedium erforderlich, um die entstandene Wärme mit dem Arbeitsmedium abzuführen. Durch die am äußeren Umfang vorgesehenen Abfuhrkanäle, d. h. im Bereich des größten Durchmessers des ringraumförmigen Arbeitsraums, deren Öffnungen der Strömungsrichtung des Arbeitsmediumkreislaufes am äußeren Umfang des Arbeitsraumes im Retarderbetrieb entgegenstehen, strömt aufgrund ihrer Ausrichtung entgegen der hier vorliegenden Meridianströmungsrichtung ein erheblicher Teil des Arbeitsmediums direkt aus dem Arbeitsraum heraus. Im Turbokupplungsbetrieb hingegen, in welchem sich das Arbeitsmedium infolge des geringeren Schlupfes (dieser beträgt im Retarderbetrieb 100 Prozent, im Turbokupplungsbetrieb vorteilhaft 3 bis 5 Prozent) weitaus geringer erwärmt, ist ein geringerer Durchsatz von Arbeitsmedium durch die hydrodynamische Kupplung erforderlich. Da sich in diesem Fall die Meridianströmung umkehrt, fließt der größte Teil des Arbeitsmediums über die radial außenliegenden, jetzt in Richtung der Arbeitsmediumströmung ausgerichteten Öffnungen der Auslasskanäle hinweg, und ein entsprechend geringer Durchsatz ergibt sich. Die Mündung der Abfuhrkanäle am Umfang, insbesondere äußeren Umfang, des Arbeitsraums ist somit vorteilhaft tangential, insbesondere im Primärrad ausgeführt, d. h. der in Strömungsrichtung gesehen erste Abschnitt, welcher sich an die Mündung der Abfuhrkanäle im Arbeitsraum anschließt, wird tangential zum Umfang, insbesondere im Bereich des größten Durchmessers, des Arbeitsraums im Primärrad ausgebildet. Vorteilhaft verläuft dieser Bereich achsparallel zur Drehachse der hydrodynamischen Kupplung. Dies wird später mit Bezug auf die Figur 1 in weiterem Detail beschrieben.

Die Erfindung soll nachfolgend anhand eines Ausführungsbeispiels näher erläutert werden.

Es zeigen:
- Figur 1: ein Ausführungsbeispiel einer erfindungsgemäßen hydrodynamischen Kupplung in einer längsgeschnittenen Ansicht;
- Figur 2: eine quergeschnittene Ansicht entlang der Schnittlinie B - B aus der Figur 1;
- Figur 3: eine quergeschnittene Ansicht entlang der Schnittlinie A - A aus der Figur 1;
- Figur 4: die Anordnung einer erfindungsgemäßen hydrodynamischen Kupplung in einem Antriebsstrang eines Turbocompoundsystems.

Im gezeigten Axialschnitt in der Figur 1 erkennt man das Primärrad 1, welches auf der Antriebswelle 4 angeordnet ist. Im einzelnen ist das Primärrad 1 stirnseitig derart an die Antriebswelle 4 angeschraubt und abgedichtet, dass die stirnseitige Kontur der Antriebswelle 4 einen Teil des Endabschnittes des Zufuhrkanals 5 bildet, welcher im Bereich des Umfanges 3.2 im Zentrum des Arbeitsraumes 3 mündet. Zusätzlich verläuft der Zufuhrkanal 5 über der Längsachse der Antriebswelle 4 in Längsrichtung und ist dabei als Durchgangsbohrung ausgebildet. Dies hat den Vorteil, dass durch den Axialabschnitt des Zufuhrkanals 5 die gezeigten Schrauben, mit welchem das Sekundärrad stirnseitig auf der Welle 7 angeschraubt ist, verschraubt beziehungsweise gelöst werden können.

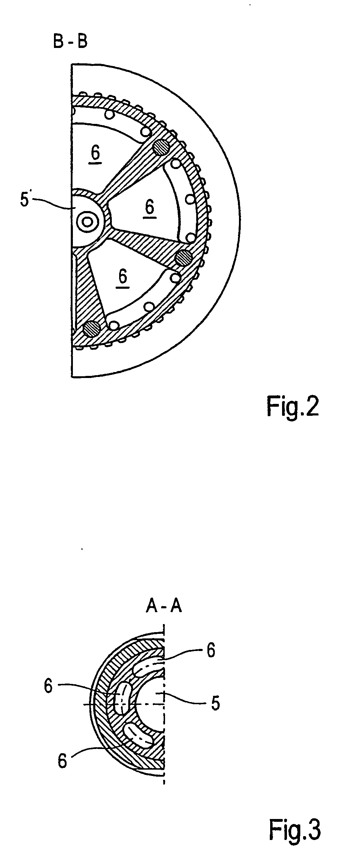

Radial außerhalb des Zufuhrkanals 5 ist in der Antriebswelle 4 eine Vielzahl von Abfuhrkanälen 6 zum Abführen von Arbeitsmedium aus dem Arbeitsraum 3 der hydrodynamischen Kupplung ausgebildet. Oberhalb der Längsachse erkennt man einen solchen Abfuhrkanal 6 im Querschnitt. Die Vielzahl der Abfuhrkanäle 6 umschließen den Zufuhrkanal 5 vollständig, wie man insbesondere in den Figuren 2 und 3 erkennen kann.

Die Abfuhrkanäle 6 weisen im wesentlichen einen Strömungsquerschnitt in Form eines Sektors eines Ringspaltes auf. Der Zufuhrkanal hingegen weist über den größten axialen Bereich einen kreisrunden Strömungsquerschnitt auf und ist erst im Bereich des Primärrades radial nach außen geführt und mündet in Form einer Vielzahl von Einlassbohrungen, welche über dem Umfang 3.2 verteilt sind, in das Zentrum des Arbeitsraumes 3.

Die Abfuhrkanäle 6 verlaufen zunächst ebenfalls, beginnend vom antriebsseitigen Ende 4.1 der Antriebswelle 4, in axialer Richtung und sind im Bereich des Primärrades 1 derart radial nach außen umgelenkt, dass sie wiederum axial im Bereich des größten Durchmessers 3.3 in den Arbeitsraum 3 münden. Dies bietet den bereits oben beschriebenen Vorteil, dass die Arbeitsmediumströmung im Retarderbetrieb direkt in die Mündungen der Auslasskanäle 6 hineingedrückt wird, was einen entsprechend großen Durchsatz durch die hydrodynamische Kupplung zur Folge hat, da im Retarderbetrieb die Strömung im Sekundärrad 2 radial nach außen beschleunigt wird und im Bereich des äußeren Umfangs 3.3 axial in das Primärrad 1 eintritt (in der Richtung von links nach rechts in der Figur 1). Im Turbokupplungsbetrieb hingegen strömt das Arbeitsmedium in der Kreislaufströmung im Bereich des äußeren Umfangs 3.3 von rechts nach links, das heißt axial aus dem Primärrad in das Sekundärrad, und ein entsprechend geringer Teil von Arbeitsmedium wird durch die Auslasskanäle 6 aufgenommen. Der größte Anteil von Arbeitsmedium strömt über die Auslassöffnungen der Abfuhrkanäle 6 hinweg, wird im Sekundärrad radial nach innen verzögert und tritt im Bereich des inneren Umfangs 3.1 des Arbeitsraums 3 wiederum axial in das Primärrad 1 ein.

Das Arbeitsmedium wird in den Zufuhrkanal 5 und aus den Abfuhrkanälen 6 über die Stirnseite 4.1 der Antriebswelle 4 geleitet. Dazu ist stimseitig der Antriebswelle 4 ein Modul 8 mit einem zentralen Kanal 9 und einem den zentralen Kanal 9 umschließenden ringspaltförmigen Kanal 10 angeordnet. Der zentrale Arbeitsmediumkanal 9 weist zumindest im Bereich des der Antriebswelle 4 zugewandten Endes einen kreisförmigen Strömungsquerschnitt auf, wobei der Zufuhrkanal 5 und der Arbeitsmediumkanal 9 miteinander fluchten. Aufgrund des ringspaltförmigen Querschnitts des Arbeitsmediumkanals 10 zumindest in dem Endbereich des Moduls 8, welcher der Antriebswelle 4 zugewandt ist, fluchten auch die Abfuhrkanäle 6 mit dem Arbeitsmediumkanal 10.

Eine Abdichtung des Abfuhrkanals 6 beziehungsweise des Arbeitsmediumkanals 10 gegenüber der Umgebung erfolgt mittels der Gleitringdichtung 11. Eine besondere Abdichtung des Zufuhrkanals 5 beziehungsweise des Arbeitsmediumkanals 9 ist nicht erforderlich, hier ist lediglich eine spaltförmige Abdichtung im Bereich des Anschlusses der Antriebswelle 4 gegenüber dem Modul 8 vorgesehen. Ein gewisser Leckagestrom vom Zufuhrkanal 5 beziehungsweise Arbeitsmediumkanal 9 in die Abfuhrkanäle 6 beziehungsweise den Arbeitsmediumkanal 10 ist zulässig.

Da bei herkömmlichen Ausführungen, in welchen die Zufuhr des Arbeitsmediums in den Arbeitsraum über die Antriebswelle 4 und die Abfuhr des Arbeitsmediums aus dem Arbeitsraum über die Welle 7 erfolgte, auch im Bereich des entfernt gelegenen axialen Endes der Welle 7 eine Gleitringdichtung entsprechend der Gleitringdichtung 11 vorgesehen werden musste, bietet die gezeigte Ausführung den Vorteil, dass eine Gleitringdichtung.weniger notwendig ist. Dies führt zu verminderten Kosten und einer höheren Betriebssicherheit.

Beide Räder, das heißt Primärrad 1 und Sekundärrad 2, sind wie gezeigt fliegend auf den jeweiligen Wellen 4 und 7 gelagert. Dadurch können alle Lager außerhalb des Kembereiches der hydrodynamischen Kupplung positioniert werden.

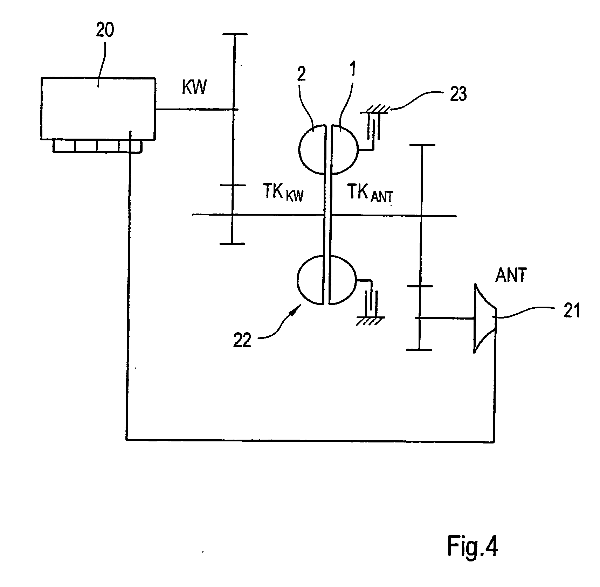

In der Figur 4 erkennt man eine hydrodynamische Kupplung 22, welche in eine Triebverbindung zwischen der Kurbelwelle KW und einer Abgasnutzturbine 21 (ANT) geschaltet ist. Die Kurbelwelle 20 wird, wie bekannt, von einem Verbrennungsmotor 20 angetrieben, und die Abgasnutzturbine 21 ist im Abgasstrom des Verbrennungsmotors 20 angeordnet, um Abgasenergie zum Antrieb der Kurbelwelle zu nutzen (Turbokupplungsbetrieb der hydrodynamischen Kupplung 22).

Im Retarderbetrieb der hydrodynamischen Kupplung 22 wird das Primärrad 1 mittels der Lamellenkupplung 23 gegen Verdrehung verriegelt, und von der Kurbelwelle auf das Sekundärrad 2 übertragenes Drehmoment wird über das Primärrad 1 und die Lamellenkupplung 23 abgeführt, so dass die Kurbelwelle gebremst wird.

### Bezugszeichenliste

- 1: Primärrad
- 2: Sekundärrad
- 3: Arbeitsraum
- 4: Antriebswelle
- 4.1: Stirnseite der Antriebswelle
- 5: Zufuhrkanal
- 6: Abfuhrkanal
- 7: Welle
- 8: Modul
- 9: Arbeitsmediumkanal
- 10: Arbeitsmediumkanal
- 11: Gleitringdichtung
- 20: Verbrennungsmotor
- 21: Abgasnutzturbine
- 22: hydrodynamische Kupplung
- 23: Lamellenkupplung

## Patentansprüche

1. Hydrodynamische Kupplung
1.1 mit einem Primärrad (1);
1.2 mit einem Sekundärrad (2);
1.3 das Primärrad (1) und das Sekundärrad (2) bilden miteinander einen torusförmigen Arbeitsraum (3) aus;
1.4 das Primärrad (1) ist auf einer Antriebswelle (4) angeordnet oder integral mit dieser ausgebildet;
**gekennzeichnet durch** das folgende Merkmal:
1.5 in der Antriebswelle (4) ist mindestens ein Zufuhrkanal (5) zum Zuführen von Arbeitsmedium in den Arbeitsraum (3) und mindestens ein Abfuhrkanal (6) zum gleichzeitigen Abführen von Arbeitsmedium aus dem Arbeitsraum (3) ausgebildet, wobei
der mindestens eine Zufuhrkanal (5) und der mindestens eine Abfuhrkanal (6) zumindest über einen vorgegebenen Abschnitt in axialer Richtung in der Antriebswelle (4) verlaufen, wobei der mindestens eine Abfuhrkanal (6) auf einem größeren Umfang als der mindestens eine Zufuhrkanal (5) angeordnet ist, und
der Zufuhrkanal (5) vom axialen Ende (4.1) der Antriebswelle (4), welches entfernt vom Arbeitsraum (3) gelegen ist, bis zumindest nahezu dem anderen Ende der Antriebswelle (4) in Form eines zentralen Arbeitsmediumkanals auf der Längsachse der Antriebswelle (4) ausgebildet ist und von einer Vielzahl von Abfuhrkanälen (6), welche radial außerhalb vorgesehen sind, umschlossen wird.

2. Hydrodynamische Kupplung gemäß Anspruch 1, **dadurch gekennzeichnet, dass** die Abfuhrkanäle (6) in einem Bereich des äußeren Umfangs (3.3) in den Arbeitsraum (3) münden und der Zufuhrkanal (5) im Bereich eines mittleren Umfangs (3.2), welcher nahe der Flächenmitte zwischen dem inneren Umfang (3.1) und dem äußeren Umfang (3.3) des Arbeitsraums (3) gelegen ist, insbesondere in Form einer Vielzahl von Einlassöffnungen, in den Arbeitsraum (3) mündet.

3. Hydrodynamische Kupplung gemäß einem der Ansprüche 1 bis 2, **dadurch gekennzeichnet, dass** das Primärrad (1) und das Sekundärrad (2) jeweils fliegend auf einer Welle (4, 7) gelagert sind.

4. Hydrodynamische Kupplung gemäß einem der Ansprüche 1 bis 3, **dadurch gekennzeichnet, dass** das Primärrad (1) gegen Verdrehung mechanisch verriegelbar ist, so dass die hydrodynamische Kupplung bei angetriebenem Sekundärrad (2) die Funktion eines Retarders ausübt.

5. Hydrodynamische Kupplung gemäß Anspruch 4, **dadurch gekennzeichnet, dass** der mindestens eine Abfuhrkanal (6) tangential entgegen der Strömungsrichtung der Kreislaufströmung von Arbeitsmedium bei mechanisch gegen Verdrehung verriegeltem Primärrad (1) mündet, und insbesondere der letzte Anschnitt des mindestens einen Abfuhrkanals (6) vor seiner Mündung in den Arbeitsraum (3) im Bereich des äußeren Umfangs (3.3) des Arbeitsraums (3) achsparallel zur Drehachse der hydrodynamischen Kupplung im Primärrad (1) ausgebildet wird.

6. Hydrodynamische Kupplung gemäß einem der Ansprüche 1 bis 5, **dadurch gekennzeichnet, dass** an dem gegenüber dem Arbeitsraum (3) entfernt gelegenen Ende der Antriebswelle (4) stimseitig ein Modul (8) mit einem inneren, zumindest im Bereich des Anschlusses an die Antriebswelle (4) im Querschnitt kreisförmigen oder ringspaltförmigen Arbeitsmediumkanal (9), der mit dem Zufuhrkanal (5) strömungsleitend verbunden ist, und einem äußeren, den inneren Arbeitsmediumkanal (9) umschließenden, zumindest im Bereich des Anschlusses an der Antriebswelle (4) im Querschnitt ringspaltförmigen Arbeitsmediumkanal (10), der mit dem wenigstens einen Auslasskanal (6) in der Antriebswelle (4) strömungsleitend verbunden ist, angeordnet ist.

7. Antriebsstrang, umfassend
7.1 einen Verbrennungsmotor (20);
7.2 eine Abgasnutzturbine (21), die im Abgasstrom des Verbrennungsmotors (20) angeordnet ist;
7.3 die Abgasnutzturbine (21) ist in eine Triebverbindung mit einer Kurbelwelle, die vom Verbrennungsmotor (20) angetrieben wird, geschaltet;
**dadurch gekennzeichnet, dass**
7.4 in der Triebverbindung zwischen der Abgasnutzturbine (21) und der Kurbelwelle eine hydrodynamische Kupplung (22) gemäß einem der Ansprüche 1 bis 6 angeordnet ist, wobei das Primärrad (1) von der Abgasnutzturbine (21) antreibbar ist.

8. Antriebsstrang gemäß Anspruch 7, **dadurch gekennzeichnet, dass** das Primärrad (1) gegen Verdrehung mechanisch verriegelbar ist, so dass die hydrodynamische Kupplung (22) die Kurbelwelle hydrodynamisch abbremst.

## Claims

1. A hydrodynamic coupling
1.1 with a primary wheel (1);
1.2 with a secondary wheel (2);
1.2 the primary wheel (1) and the secondary wheel (2) jointly form a toroidal working chamber (3);
1.3 the primary wheel (1) is arranged on a drive shaft (4) or integrally arranged with the same;
**characterized by** the following feature:
1.4 at least one supply conduit (5) for supplying working medium into the working chamber (3) and at least one discharge conduit (6) for the simultaneous discharge of working medium from the working chamber (3) are arranged in the drive shaft (4), with the at least one supply conduit (5) and the at least one discharge conduit (6) extend in the axial direction in the drive shaft (4) at least over a predetermined section, with the at least one discharge conduit (6) being arranged on a larger circumference than the at least one supply conduit (5), and with the supply conduit (5), from the axial end (4.1) of the drive shaft (4) which is situated remote from the working chamber (3) up to at least close to the other end of the drive shaft (4), being arranged in the form of a central working medium conduit on the longitudinal axis of the drive shaft (4) and being enclosed by a plurality of discharge conduits (5) which are provided radially on the outside.

2. A hydrodynamic coupling according to claim 1, **characterized in that** the discharge conduits (6) open into the working chamber (3) in a section of the outer circumference (3.3) and the supply conduit (5) opens into the working chamber (3) in the region of a middle circumference (3.2) which is situated close to the surface center between the inner circumference (3.1) and the outer circumference (3.3) of the working chamber (3), especially in the form of a plurality of inlet openings.

3. A hydrodynamic coupling according to one of the claims 1 to 2, **characterized in that** the primary wheel (1) and the secondary wheel (2) are each held in a floating manner on a shaft (4.7).

4. A hydrodynamic coupling according to one of the claims 1 to 3, **characterized in that** the primary wheel (1) can be mechanically locked against twisting, so that the hydrodynamic coupling exercises the function of a retarder when the secondary wheel (2) is driven.

5. A hydrodynamic coupling according to claim 4, **characterized in that** the at least one discharge conduit (6) opens tangentially against the direction of flow of the cycle flow of working medium when the primary wheel (1) is mechanically locked against twisting, and especially the last section of the at least one discharge conduit (6) is arranged in an axially parallel manner relative to the rotational axis of the hydrodynamic coupling in the primary wheel (1) before its opening into the working chamber (3) in the region of the outer circumference (3.3) of the working chamber (3).

6. A hydrodynamic coupling according to one of the claims 1 to 5, **characterized in that** at the end of the drive shaft (4) which is situated remote from the working chamber (3) a module (8) is arranged on the face side which comprises an inner working medium conduit (9) which in its cross section is circular or has the shape of an annular gap in the region of the connection to the drive shaft (4) and which is connected with the supply conduit (5) in a flow-conductive manner and an outer working medium conduit (10) which encloses the inner working medium conduit (9) and which in the region of the connection to the drive shaft (4) is in the shape of an annular gap with respect to its cross section and which is connected in a flow-conductive manner with the at least one discharge conduit (6) in the drive shaft (4).

7. A drive train, comprising
7.1 an internal combustion engine (20);
7.2 an exhaust gas utilization turbine (21) which is arranged in the exhaust gas stream of the internal combustion engine (20);
7.3 the exhaust gas utilization turbine (21) is switched in a drive connection with a crankshaft which is driven by the internal combustion engine (20),
**characterized in that**
7.4 a hydrodynamic coupling (22) according to one of the claims 1 to 6 is arranged in the drive connection between the exhaust gas utilization turbine (21) and the crankshaft, with the primary wheel (1) can be driven by the exhaust gas utilization turbine (21).

8. A drive train according to claim 7, **characterized in that** the primary wheel (1) can be locked mechanically against twisting, so that the hydrodynamic coupling (22) brakes the crankshaft in a hydrodynamic way.

## Revendications

1. Accouplement hydrodynamique
1.1 avec une roue primaire (1);
1.2 avec une roue secondaire (2);
1.3 la roue primaire (1) et la roue secondaire (2) forment ensemble un espace de travail toroïdal (3);
1.4 la roue primaire (1) est disposée sur un arbre d'entraînement (4) ou formée d'un seul tenant avec celui-ci;
**caractérisé en ce que**:
1.5 il est prévu dans l'arbre d'entraînement (4) au moins un canal d'arrivée (5) pour l'arrivée de fluide de travail dans l'espace de travail (3) et au moins un canal d'évacuation (6) pour l'évacuation simultanée de fluide de travail hors de l'espace de travail (3),
le canal d'arrivée (5) au nombre d'un au moins et le canal d'évacuation (6) au nombre d'un au moins s'étendant au moins sur un tronçon prédéterminé dans le sens axial dans l'arbre d'entraînement (4), le canal d'évacuation (6) au nombre d'un au moins étant disposé sur une plus grande circonférence que le canal d'arrivée (5) au nombre d'un au moins, et
le canal d'arrivée (5) étant conformé, de l'extrémité axiale (4.1) de l'arbre d'entraînement (4) distante de l'espace de travail (3) jusque presque à l'autre extrémité de l'arbre d'entraînement (4), comme un canal central pour le fluide de travail sur l'axe longitudinal de l'arbre d'entraînement (4) et étant entouré par une pluralité de canaux d'évacuation (6), prévus sur l'extérieur dans le sens radial.

2. Accouplement hydrodynamique selon la revendication 1, **caractérisé en ce que** les canaux d'évacuation (6) débouchent dans l'espace de travail (3) dans une partie de la circonférence extérieure (3.3) et le canal d'arrivée (5) débouche dans l'espace de travail (3) au niveau d'une circonférence moyenne (3.2), située près du milieu de l'aire entre la circonférence intérieure (3.1) et la circonférence extérieure (3.3) de l'espace de travail (3), en particulier sous la forme d'une pluralité d'ouvertures d'entrée.

3. Accouplement hydrodynamique selon l'une des revendications 1 à 2, **caractérisé en ce que** la roue primaire (1) et la roue secondaire (2) sont supportées chacune de manière flottante sur un arbre (4, 7).

4. Accouplement hydrodynamique selon l'une des revendications 1 à 3, **caractérisé en ce que** la roue primaire (1) peut être bloquée mécaniquement pour empêcher sa rotation, de sorte que l'accouplement hydromécanique joue le rôle d'un retardateur lorsque la roue secondaire (2) est entraînée.

5. Accouplement hydrodynamique selon la revendication 4, **caractérisé en ce que** le canal d'évacuation (6) au nombre d'un au moins débouche de façon tangente en sens inverse du sens d'écoulement du circuit de fluide de travail lorsque la roue primaire (1) est bloquée mécaniquement pour empêcher sa rotation, et le deuxième tronçon, en particulier, du canal d'évacuation (6) au nombre d'un au moins est formé, avant de déboucher dans l'espace de travail (3) au niveau de la circonférence extérieure (3.3) de l'espace de travail (3), de façon parallèle à l'axe de rotation de l'accouplement hydrodynamique dans la roue primaire (1).

6. Accouplement hydrodynamique selon l'une des revendications 1 à 5, **caractérisé en ce qu'**il est prévu à l'extrémité de l'arbre d'entraînement (4) distante de l'espace de travail (3), sur la face d'extrémité, un module (8) comprenant un canal de fluide de travail (9) intérieur, de section circulaire ou annulaire au moins au niveau du raccordement sur l'arbre d'entraînement (4), qui est en communication de fluide avec le canal d'arrivée (5), et un canal de fluide de travail (10) extérieur, entourant le canal de fluide de travail intérieur (9) et ayant une section en forme de fente annulaire au moins au niveau du raccordement sur l'arbre d'entraînement (4), qui est en communication de fluide avec le canal de sortie (6) au nombre d'un au moins dans l'arbre d'entraînement (4).

7. Chaîne cinématique comprenant
7.1 un moteur à combustion interne (20);
7.2 une turbine d'utilisation des gaz d'échappement (21), disposée dans le flux de gaz d'échappement du moteur à combustion interne (20);
7.3 la turbine d'utilisation des gaz d'échappement (21) est montée en relation motrice avec un vilebrequin entraîné par le moteur à combustion interne (20);
**caractérisée en ce que**:
7.4 il est prévu dans la liaison motrice entre la turbine d'utilisation des gaz d'échappement (21) et le vilebrequin un accouplement hydrodynamique (22) selon l'une des revendications 1 à 6, la roue primaire (1) pouvant être entraînée par la turbine d'utilisation des gaz d'échappement (21).

8. Chaîne cinématique selon la revendication 7, **caractérisée en ce que** la roue primaire (1) peut être bloquée mécaniquement pour empêcher sa rotation, de sorte que l'accouplement hydrodynamique (22) freine le vilebrequin par une action hydrodynamique.
